# EUROPEAN PATENT APPLICATION

(11) **EP 4 510 326 A1**
(43) Date of publication of application: **19.02.2025**
(21) Application number: 22963918.2
(22) Date of filing: 03.11.2022
(51) Int. Cl.: H01M 50/166

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: CHEN, Long, Ningde, Fujian 352100 (CN); LIN, Denghua, Ningde, Fujian 352100 (CN); ZHOU, Wenlin, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: von Tietzen und Hennig, Nikolaus
(86) International application number: PCT/CN2022/129481
(87) International publication number: WO 2024/092607

(57) **Abstract**

This application provides a battery cell, a battery, and an electrical device, and enhances safety of the battery cell by improving the structure of the battery cell. The battery cell includes: a housing, on which an opening is created; an electrode assembly, accommodated in the housing; an electrode terminal, disposed on a bottom wall of the housing and connected to a tab of the electrode assembly, where the bottom wall is opposite to the opening; and a cover plate, connected to the housing and configured to fit and cover the opening.

## Description

### TECHNICAL FIELD

This application relates to the technical field of batteries, and in particular, to a battery cell, a battery, and an electrical device.

### BACKGROUND

Energy conservation and emission reduction are key to sustainable development of the automobile industry. Based on this situation, electric vehicles have become an important part of the sustainable development of the automobile industry by virtue of energy saving and environmental friendliness. Battery technology is crucial to development of electric vehicles.

The battery is mounted in an electrical device such as a vehicle. Because the movement of the vehicle causes some impact on the battery, the structure of a battery cell in the battery directly affects the safety of the battery. Therefore, how to improve the structure of the battery cell to enhance the safety of the battery cell has become a problem to be solved.

### SUMMARY

This application provides a battery cell, a battery, and an electrical device, and enhances safety of the battery cell by improving the structure of the battery cell.

According to a first aspect, a battery cell is provided. The battery cell includes: a housing, on which an opening is created; an electrode assembly, accommodated in the housing; an electrode terminal, disposed on a bottom wall of the housing and connected to a tab of the electrode assembly, where the bottom wall is opposite to the opening; and a cover plate, connected to the housing and configured to fit and cover the opening.

The electrode terminal is disposed on the bottom wall of the housing, and the cover plate is connected to the housing and fits and covers the opening of the housing, and therefore, a junction between the cover plate and the housing is located on the opposite side of the electrode terminal, and the junction between the cover plate and the housing is relatively far away from the electrode terminal. This reduces the impact on the junction between the cover plate and the housing when the battery cell is subjected to an external impact, reduces the risk of failure of the connection between the cover plate and the housing, and improves the safety of the battery cell.

In an implementation, the battery cell is disposed in a box of a battery, and the cover plate is fixed to a wall of the box. When the battery cells are assembled to form a battery, the cover plate of the battery cell is fixed to the wall of the box, thereby reducing the impact on the junction between the cover plate and the housing, and enhancing the safety of the battery cell.

In an implementation, the box contains a plurality of the battery cells. Sidewalls of the housings of adjacent battery cells are fixed to each other. When the battery cells are assembled to form a battery, the adjacent battery cells are fixed to each other, thereby ensuring stability of the junction between the cover plate and the housing, and enhancing the safety of the battery cell.

In an implementation, the cover plate is located below the bottom wall when the battery is disposed in an electrical device. When a battery is formed of the battery cells and applied in an electrical device such as a vehicle, the battery cells are positioned "upright". In this way, when a chassis of a vehicle is impacted during movement of the vehicle or when another emergency occurs, because the electrode terminals of the battery cell face upward, the above arrangement reduces the damage to the electrode terminals caused by the impact or other emergencies, and ensures safety of the battery.

In an embodiment, a thickness of the bottom wall is greater than a thickness of the cover plate. The relatively large thickness of the bottom wall ensures sufficient strength of the bottom wall, and enables the electrode terminal to be stably fixed on the bottom wall. The relatively small thickness of the cover plate reduces the weight and volume of the battery cell, and increases the energy density of the battery cell.

In an embodiment, a thickness of the bottom wall is greater than 0.1 mm and less than or equal to 5 mm, thereby not only ensuring sufficient strength of the bottom wall, but also avoiding an unnecessary increase in weight and volume, and ensuring relatively high structural stability of the battery cell.

In an embodiment, a thickness of the cover plate is greater than or equal to 0.1 mm and less than or equal to 3 mm, thereby reducing the weight and volume of the battery cell but without increasing the difficulty of connection between the cover plate and the housing.

In this embodiment, the cover plate is made of a metal material or a polymer material. Such materials are easily achievable and ensure sufficient strength of the cover plate.

In an embodiment, the cover plate is welded to the housing. The connection implemented by welding exhibits the advantages of good connection performance, high airtightness and watertightness, and easy operation and implementation, thereby not only implementing the connection between the cover plate and the housing, but also improving the hermeticity of the junction between the cover plate and the housing.

In an implementation, the cover plate is welded to the housing by laser welding. Laser welding exhibits the advantages of fast speed, large depth, narrow weld seams, and resistance to deformation, and is especially suitable for a safety-demanding scenarios such as batteries, and can implement reliable welding between the housing and the cover plate of the battery cell.

In an implementation, a blocking structure is disposed in the opening of the housing. The blocking structure is configured to limit a depth by which the cover plate enters the housing in a first direction perpendicular to the bottom wall. Because the blocking structure constrains the cover plate in the first direction, the cover plate is not prone to wobble in the first direction X in a process of connecting the cover plate to the housing.

In an implementation, the blocking structure is a ramp formed on a surface of a sidewall of the housing, the surface being oriented toward an interior of the housing. A dimension of the cover plate in a second direction perpendicular to the sidewall falls between a first distance and a second distance. The first distance and the second distance are a minimum distance and a maximum distance between two opposite ramps in the second direction respectively. In this way, when the cover plate fits and covers the opening along the first direction, the ramp can limit the depth by which the cover plate enters the housing, so that the cover plate is constrained in the first direction, and the cover plate is not prone to wobble in the first direction in a process of connecting the cover plate to the housing.

In an implementation, the blocking structure is a step formed on a surface of a sidewall of the housing, the surface being oriented toward an interior of the housing. The cover plate is disposed on the step. In this way, when the cover plate fits and covers the opening along the first direction, because the edge of the cover plate laps the step face, the step can limit the depth by which the cover plate enters the housing, so that the cover plate is constrained in the first direction, and the cover plate is not prone to wobble in the first direction in a process of connecting the cover plate to the housing.

In an implementation, a weld seam between the cover plate and the housing is perpendicular to the bottom wall. A weld mark formed by welding between the cover plate and the housing exceeds the sidewall in the first direction by a margin less than or equal to 0.5 mm, and the weld mark exceeds the sidewall in the second direction by a margin less than or equal to 0.08 mm. In this way, this avoids interference between the weld mark and other surrounding structural components, and avoids an impact on other structural components, where the weld mark is formed by welding between the cover plate and the housing.

In an implementation, the cover plate includes a first part and a second part. A dimension of the second part in a second direction perpendicular to a sidewall of the housing is greater than a dimension of the first part in the second direction. The first part is accommodated in the opening. An edge of the second part abuts on an end face of the sidewall, the end face being oriented away from the bottom wall. With a T-shaped cover plate in use, when the cover plate fits and covers the opening along the first direction, because the edge of the second part of the cover plate abuts on the end face of the sidewall and the end face is oriented away from the bottom wall, the sidewall can block the second part from entering the housing, thereby limiting the depth by which the cover plate enters the housing. In this way, the cover plate is constrained in the first direction, and the cover plate is not prone to wobble in the first direction in a process of connecting the cover plate to the housing.

In an implementation, a weld seam between the cover plate and the housing is perpendicular to the sidewall. A weld mark formed by welding between the cover plate and the housing exceeds the sidewall in the first direction by a margin less than or equal to 0.5 mm, and the weld mark exceeds the sidewall in the second direction by a margin less than or equal to 0.08 mm. In this way, this avoids interference between the weld mark and other surrounding structural components, and avoids an impact on other structural components, where the weld mark is formed by welding between the cover plate and the housing.

In an implementation, an injection hole configured to inject an electrolyte solution is further created on the bottom wall, thereby facilitating injection of the electrolyte solution into the battery cell.

In an implementation, an electrode lead-out hole is further created on the bottom wall. The electrode terminal is mounted in the electrode lead-out hole. The electrode lead-out hole facilitates electrical connection between a tab of the electrode assembly and the electrode terminal, so that a current of the tab can be led from the electrode lead-out hole to the electrode terminal.

In an implementation, a pressure relief mechanism is disposed on the cover plate. The pressure relief mechanism is configured to release an internal pressure of the battery cell when the internal pressure exceeds a threshold. The electrode terminal of the battery cell is disposed on the bottom wall of the housing, and the pressure relief mechanism is disposed on the cover plate opposite to the bottom wall. In other words, the pressure relief mechanism and the electrode terminal are disposed on different walls of the battery cell. In this way, the emissions in the battery cell are farther away from the electrode terminal, thereby reducing the impact of the emissions on the electrode terminal and busbar component, and further enhancing the safety of the battery.

According to a second aspect, a battery is provided, including: a plurality of battery cells disclosed in the first aspect or any implementation of the first aspect; and a box, configured to accommodate the plurality of the battery cells, where the cover plate of the battery cell is fixed to the wall of the box.

In an implementation, sidewalls of the housings of adjacent battery cells in the box are fixed to each other.

In an implementation, the cover plate of the battery cell is located below the bottom wall of the housing of the battery cell when the battery is disposed in an electrical device.

According to a third aspect, an electrical device is provided, including the battery disclosed in the second aspect or any implementation of the second aspect. The battery is configured to provide electrical energy.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is an exploded view of a battery cell according to an embodiment of this application;
FIG. 5 is a schematic diagram of a pressure relief mechanism according to an embodiment of this application;
FIG. 6 is a schematic diagram of a partial region of a bottom wall of a housing and a cover plate according to an embodiment of this application;
FIG. 7 is a close-up view of a junction between a housing and a cover plate according to an embodiment of this application;
FIG. 8 is a schematic diagram of connection between a housing and a cover plate according to an embodiment of this application;
FIG. 9 is a close-up view of a junction between a housing and a cover plate according to an embodiment of this application;
FIG. 10 and FIG. 11 are schematic diagrams of weld marks formed by welding between a housing and a cover plate based on structures shown in FIG. 7 to FIG. 9;
FIG. 12 is a close-up view of a junction between a housing and a cover plate according to an embodiment of this application;
FIG. 13 is a schematic diagram of connection between a housing and a cover plate according to an embodiment of this application; and
FIG. 14 is a schematic diagram of a weld mark formed by welding between a housing and a cover plate based on structures shown in FIG. 12 and FIG. 13.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

In this application, a battery means a physical module that includes one or more battery cells to provide electrical energy. For example, the battery in this application may include a battery module, a battery pack, or the like. A battery typically includes a box configured to package one or more battery cells. The box prevents liquid or other foreign matters from affecting the charging or discharging of the battery cells.

In some embodiments, a battery cell may include types such as a lithium-ion secondary battery, a lithium-ion primary battery, a lithium-sulfur battery, a sodium-lithium-ion battery, a sodium-ion battery, or a magnesium-ion battery. The type of the battery cell is not limited herein. The battery cell is also referred to as a cell.

To meet different power demands, a plurality of battery cells in a battery may be connected in series, parallel, or series-and-parallel pattern. The series-and-parallel pattern means a combination of series connection and parallel connection. In some embodiments, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery. The battery is further mounted in the electrical device to provide electrical energy for the electrical device.

The battery box may further include a signal transmission assembly. The signal transmission assembly may be configured to transmit signals such as voltage and/or temperature of the battery cell. The signal transmission assembly may include a busbar component. The busbar component is configured to implement electrical connection, such as parallel connection, series connection, or series-and-parallel connection, between a plurality of battery cells. The busbar component may implement electrical connection between the battery cells by connecting electrode terminals of the battery cells. In some embodiments, the busbar component may be fixed to the electrode terminals of the battery cell by welding. The busbar component transmits the voltage of the battery cell. A plurality of battery cells are connected in series to obtain a higher voltage. Correspondingly, an electrical connection formed by the busbar component may be referred to as a "high-voltage connection".

The signal transmission assembly may further include, in addition to the busbar component, a sensor device configured to sense the status of a battery cell. For example, the sensor device may be configured to measure and transmit sensed signals such as temperature and state of charge of the battery cell.

The busbar component and the sensor device may be packaged in an insulation layer to form the signal transmission assembly. Accordingly, the signal transmission assembly may be configured to transmit voltage and/or sensed signals of the battery cell. No insulation layer is disposed at a junction between the signal transmission assembly and the electrode terminal of the battery cell. In other words, the insulation layer is opened at the junction to enable connection to the electrode terminal of the battery cell.

A battery cell includes an electrode assembly and an electrolytic solution. The electrode assembly includes a positive electrode plate, a negative electrode plate, and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. Of the current collector, a part not coated with the positive active material layer protrudes from a part coated with the positive active material layer, and the part not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the current collector, a part not coated with the negative active material layer protrudes from a part coated with the negative active material layer, and the part not coated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as polypropylene (polypropylene, PP) or polyethylene (polyethylene, PE). In addition, the electrode assembly may be of a jelly-roll type structure or a stacked type structure, without being limited herein.

The battery cell further includes a housing and an end cap. The housing includes an opening. The end cap is configured to fit and cover the opening of the housing, so as to combine with the housing to form an accommodation space. The accommodation space is configured to accommodate the electrode assembly and an electrolyte solution. During assembling, the electrode assembly may be mounted into the housing through the opening of the housing, and then the end cap is connected to the housing to seal the opening of the housing.

To lead out the electrical energy from the electrode assembly, the battery cell is usually further fitted with an electrode terminal. The electrode terminal is configured to electrically connect the electrode assembly to an external circuit to implement charging and discharging of the electrode assembly.

In a battery, the electrode terminal needs to be connected to external components such as a busbar component and a detection harness. When a battery cell is subjected to an external impact, the external components pull the electrode terminal. In the related art, the electrode terminal is usually mounted on the end cap. When an external component exerts a pushing or pulling force or a twisting force on the electrode terminal, the force is applied to the junction between the end cap and the housing accordingly. The long-term fatigue stress at the junction between the end cap and the housing may eventually result in a crack, cause failure of the connection between the end cap and the housing, give rise to risks such as electrolyte leakage or even fire, and pose safety hazards.

In view of this, this application provides a technical solution. In this technical solution, the end cap is replaced with a cover plate. The cover plate is configured to fit and cover the opening of the housing. By disposing the electrode terminal at one end of the housing away from the cover plate, the junction between the cover plate and the housing is far away from the electrode terminal. Therefore, when the battery cell is subjected to an external impact, the impact on the junction between the cover plate and the housing is reduced, the risk of failure of connection between the cover plate and the housing is reduced, and the safety of the battery cell is improved.

All technical solutions described in the embodiments of this application are applicable to various battery-powered devices such as a mobile phone, a portable device, a laptop computer, an electric power cart, an electrical toy, an electric tool, an electric vehicle, a ship, and a spacecraft. The spacecraft includes an airplane, a rocket, a space shuttle, a spaceship, and the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

Understandably, the technical solutions described in the embodiments of this application are not only applicable to the devices mentioned above, but also applicable to all battery-powered devices. However, for brevity, the following embodiments are described by using a vehicle as an example.

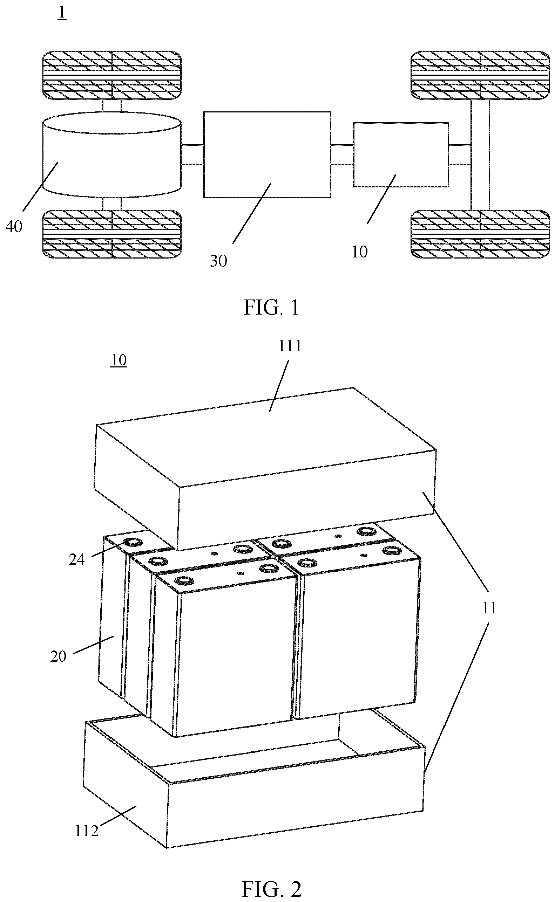

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

The battery 10 may include a plurality of battery cells. For example, as shown in FIG. 2, which is a schematic structural diagram of a battery 10 according to an embodiment of this application, the battery 10 may include a plurality of battery cells 20. The battery 10 may further include a box 11. The interior of the box 11 is a hollow structure. A plurality of battery cells 20 are accommodated in the box 11. As shown in FIG. 2, the box 11 may include two parts, herein referred to as a first box portion 111 and a second box portion 112 respectively. The first box portion 111 and the second box portion 112 are snap-fitted together. The shapes of the first box portion 111 and the second box portion 112 may depend on the shape of the plurality of battery cells 20 combined. An opening is created on at least one of the first box portion 111 or the second box portion 112. For example, as shown in FIG. 2, both the first box portion 111 and the second box portion 112 each may be a hollow cuboid, and each may include only one opening surface. The opening of the first box portion 111 is opposite to the opening of the second box portion 112. The first box portion 111 and the second box portion 112 are snap-fitted together to form a box 11 that includes a closed cavity. For another example, different from what is shown in FIG. 2, of the first box portion 111 and the second box portion 112, only one is a hollow cuboid with an opening, and the other assumes a plate shape to cover the opening. For example, the second box portion 112 is a hollow cuboid with only one opening surface, and the first box portion 111 assumes a plate shape. In this case, the first box portion 111 fits and covers the opening of the second box portion 112 to form a box with a closed cavity. The cavity may be configured to accommodate a plurality of battery cells 20. The plurality of battery cells 20 are connected in parallel, series, or series-and-parallel pattern and combined together, and then placed into the box 11 that is formed by snap-fitting the first box portion 111 and the second box portion 112. Definitely, the first box portion 111 and the second box portion 112 may be in other shapes such as a cylinder or a hexagonal prism.

In some embodiments, the battery 10 may further include a busbar component (not shown in the drawing). The busbar component is configured to implement electrical connection, such as parallel, series, or series-and-parallel connection, between a plurality of battery cells 20. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box 11. In some embodiments, the conductive mechanism may belong to the busbar component.

Further, the battery 10 may include other structures, which are not enumerated exhaustively here. FIG. 2 uses 6 battery cells 20 as an example. In practical applications, depending on the required power, the number of battery cells 20 in a battery 10 may be set to any other value. The battery cells 20 may be connected in series, parallel, or series-and-parallel pattern to achieve a relatively high capacity or power.

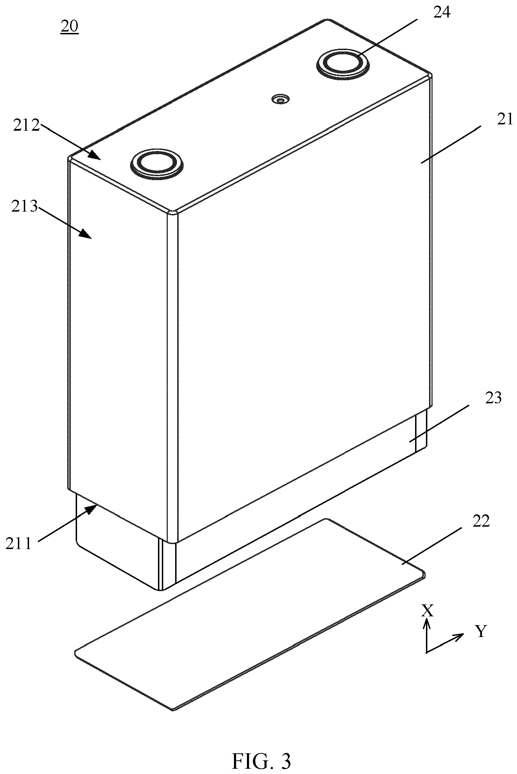

FIG. 3 is a schematic structural diagram of a battery cell 20 according to an embodiment of this application. As shown in FIG. 3, the battery cell 20 includes a housing 21, a cover plate 22, an electrode assembly 23, and an electrode terminal 24. The housing 21 includes an opening 211. The electrode assembly 23 is accommodated in the housing 21. The cover plate 22 is connected to the housing 21, and is configured to fit and cover the opening 211. The electrode terminal 24 of the battery cell 20 is disposed on the bottom wall 212 of the housing 21 and connected to a tab 231 (not shown in the drawing) of the electrode assembly 23. The bottom wall 212 is opposite to the opening 211.

The electrode terminal 24 is disposed on the bottom wall 212 of the housing 21, and the cover plate 22 is connected to the housing 21 and fits and covers the opening 211 of the housing 21, and therefore, a junction between the cover plate 22 and the housing 21 is located on the opposite side of the electrode terminal 24, and the junction between the cover plate 22 and the housing 21 is relatively far away from the electrode terminal 24. This reduces the impact on the junction between the cover plate 22 and the housing 21 when the battery cell 20 is subjected to an external impact, reduces the risk of failure of the connection between the cover plate 22 and the housing 21, and improves the safety of the battery cell 20.

The housing 21 is a structure hollowed out to form a space configured to accommodate the electrode assembly 23. The electrode terminal 24 of the battery cell 20 is disposed protrusively on the bottom wall 212 of the housing 21 by protruding away from the electrode assembly 23. The housing 21 may be in various shapes and sizes, such as a cuboid, cylinder, or hexagonal prism. The number of electrode assemblies 23 may be one or more. The shape of the housing 21 depends on the combined shape of one or more electrode assemblies 23. For example, if the electrode assembly 23 is a cylindrical structure, the housing 21 may be a cylindrical housing; or, if the electrode assembly 23 is a cuboidal structure, the housing 21 may be a cuboidal housing. The shape of the cover plate 22 mates with the shape of the housing 21. For example, if the housing 21 is a cuboidal structure, the cover plate 22 may be rectangular; if the housing 21 is a cylindrical structure, the cover plate 22 may be circular. Both the wall of the housing 21 and the cover plate 22 may be referred to as walls of the battery cell 20. For a cuboidal battery cell 20, as shown in FIG. 3, the walls of the housing 21 include a bottom wall 212 and four sidewalls 213.

In some embodiments, the battery cell 20 is disposed in a box 11 of a battery 10, and the cover plate 22 is fixed to a wall of the box 11. Here, the wall of the box means a wall configured to be fixed to the battery cell 20 in the box 11. For example, the wall may be the bottom wall of the first box portion 111 or the bottom wall of the second box portion 112 shown in FIG. 2. For another example, when one of the first box portion 111 or the second box portion 112 is plate-shaped, the plate-shaped box portion may be used as the box wall to be fixed to the battery cell 20. The cover plate 22 of the battery cell 20 may be fixed to the wall of the box 11 by means such as adhesive bonding.

When the battery cells 20 are assembled to form a battery 10, the cover plate 22 of the battery cell 20 is fixed to the wall of the box 11, and the electrode terminal 24 is located on the bottom wall of the housing 21 and away from the wall of the box 11. Therefore, when an external component pulls the electrode terminal 24 and gives rise to a displacement of the housing 21, the battery cells 20 in the box 11 constrain each other, thereby limiting the displacement of the housing 21, and in turn, reducing the impact on the junction between the cover plate 22 and the housing 21, and enhancing the safety of the battery cell 20.

In some embodiments, the box 11 contains a plurality of the battery cells 20. Sidewalls 213 of the housings 21 of adjacent battery cells 20 are fixed to each other. The adjacent battery cells 20 may be fixed to each other by means such as adhesive bonding. When the battery cells 20 are assembled to form a battery 10, not only the cover plate 22 of the battery cell 20 is fixed to the wall of the box 11, but also the sidewalls 213 of the adjacent battery cells 20 are fixed to each other, so that the battery cells 20 constrain each other more strongly. When an external component pulls the electrode terminal 24 and gives rise to a displacement of the housing 21, the displacement of the housing 21 can be limited more effectively, thereby ensuring stability of the junction between the cover plate 22 and the housing 21, and enhancing the safety of the battery cell 20.

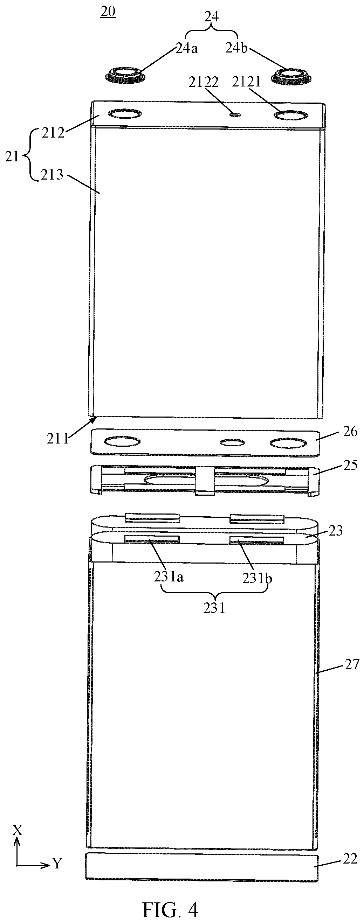

In some embodiments, when the battery 10 is mounted in an electrical device, the cover plate 22 is located below the bottom wall 212 of the housing 21. In other words, the battery cell 20 is applied "upright" in the electrical device with the electrode terminal 24 facing upward. For example, as shown in FIG. 3 and FIG. 4. when a battery 10 is formed of the battery cells 20 and applied in an electrical device such as a vehicle 1, the battery cells 20 are positioned "upright". In this way, when the chassis of the vehicle 1 is impacted during movement of the vehicle or when another emergency occurs, because the electrode terminals 24 of the battery cell 20 face upward, the above arrangement reduces the damage to the electrode terminals 24 caused by the impact or other emergencies, and ensures safety of the battery 10.

FIG. 4 is an exploded view of a battery cell 20. The housing 21 may be molded by a stretching process, for example. As shown in FIG. 4, the housing 21 includes a bottom wall 212 and a sidewall 213. An opening 211 is created on the housing 21 at one end opposite to the bottom wall 212. The cover plate 22 is configured to fit and cover the opening 211 and be connected to the housing 21. The electrode assembly 23 is electrically connected to the electrode terminal 24 by a connecting component 25. One or more electrode assemblies 23 may be accommodated in the housing 21. As an example, two electrode assemblies 23 are shown in FIG. 4. Each electrode assembly 23 includes a tab 231. For example, the tab includes a positive tab 231a and a negative tab 231b. The electrode terminal 24 includes a positive electrode terminal 24a and a negative electrode terminal 24b. The positive tab 231a is connected to the positive electrode terminal 24 by the connecting component 25. The negative tab 231b is connected to the negative electrode terminal 24b by the connecting component 25. FIG. 4 further shows an insulation component 26 disposed between the connecting component 25 and the bottom wall 212, and an insulation spacer 27 disposed around the electrode assembly 23. Such insulating members serve a function of dielectrical isolation between the electrode assembly 23 and the housing 21. The insulation component 26 is also referred to as a lower plastic sheet 26. In an embodiment of this application, the positive electrode terminal 24a and the negative electrode terminal 24b may be disposed on the bottom wall 212 concurrently.

In some embodiments, as shown in FIG. 4, an electrode lead-out hole 2121 is further created on the bottom wall 212. The electrode terminal 24 is mounted in the electrode lead-out hole 2121. The electrode lead-out hole 2121 facilitates electrical connection between the tab 231 of the electrode assembly 23 and the electrode terminal 24, so that the current of the tab 231 can be led from the electrode lead-out hole 2121 to the electrode terminal 24. The electrode terminal 24 may be electrically connected to the tab 231 by welding, bonding, snap-fitting, pressure contact, or other means.

In some embodiments, as shown in FIG. 4, an injection hole 2122 configured to inject an electrolyte solution is further created on the bottom wall 212, thereby facilitating injection of the electrolyte solution into the battery cell 20.

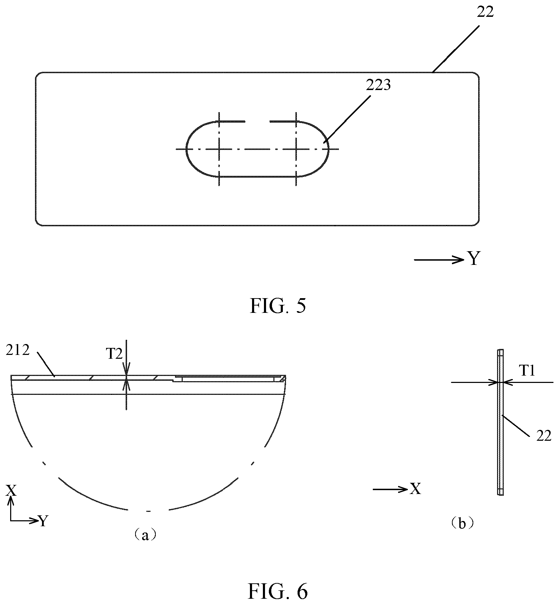

In some embodiments, a pressure relief mechanism 223 is disposed on the cover plate 22. The pressure relief mechanism 223 is configured to release an internal pressure of the battery cell 20 when the internal pressure exceeds a threshold. For example, as shown in FIG. 5, the pressure relief mechanism 223 may be an explosion-proof nick created on the cover plate 22. When a short circuit, overcharge, or another phenomenon occurs, thermal runaway may occur inside the battery cell 20 and generate a high-temperature and high-pressure gas, thereby breaking the explosion-proof nick to release the internal heat and gas pressure outward to prevent the battery cell 20 from exploding or catching fire.

In these embodiments, the electrode terminal 24 of the battery cell 20 is disposed on the bottom wall 212 of the housing 21, and the pressure relief mechanism 223 is disposed on the cover plate 22 opposite to the bottom wall 212. In other words, the pressure relief mechanism 223 and the electrode terminal 24 are disposed on different walls of the battery cell 20. In this way, the emissions in the battery cell 20 are farther away from the electrode terminal 24, thereby reducing the impact of the emissions on the electrode terminal 24 and busbar component, and further enhancing the safety of the battery 10.

The electrode terminal 24 is disposed on the bottom wall 212 of the housing 21, the cover plate 22 is opposite to the bottom wall 212, and no electrode terminal 24 needs to be disposed on the cover plate 22. Therefore, in some embodiments, the thickness T2 of the bottom wall 212 of the housing 21 may be greater than the thickness T1 of the cover plate 22.

For example, subfigure (a) of FIG. 6 shows a local region of the bottom wall 212 of the housing 21, and subfigure (b) of FIG. 6 shows a local region of the cover plate 22. The bottom wall 212 of the housing 21 is perpendicular to the first direction X. The thickness of the bottom wall 212 along the first direction X is T2. The cover plate 22 is perpendicular to the first direction X. The thickness of the cover plate 22 along the first direction X is T1. The thickness T2 of the bottom wall 212 is greater than the thickness T1 of the cover plate 22. The relatively large thickness T2 of the bottom wall 212 ensures sufficient strength of the bottom wall 212, and enables the electrode terminal 24 to be stably fixed on the bottom wall 212. The relatively small thickness T1 of the cover plate 22 reduces the weight and volume of the battery cell 20, and increases the energy density of the battery cell 20.

Because the bottom wall 212 of the housing 21 is configured to dispose the electrode terminal 24, if the thickness T2 of the bottom wall 212 is relatively small, then the strength of the bottom wall 212 may be deficient, and the bottom wall 212 may be unable to effectively support the electrode terminal 24. If the thickness T2 of the bottom wall 212 is relatively large, then the weight and footprint of the battery cell 20 are increased, and, when the battery cell 20 is applied "upright" in an electrical device, the pressure on the sidewall 213 of the housing 21 is increased, thereby impairing the structural stability of the battery cell 20. Therefore, the thickness T2 of the bottom wall 212 of the housing 21 needs to fall within an appropriate range. In some embodiments, the thickness T2 of the bottom wall 212 of the housing 21 is greater than or equal to 0.1 mm and less than or equal to 5 mm, thereby not only ensuring sufficient strength of the bottom wall 212, but also avoiding an unnecessary increase in weight and volume, and ensuring relatively high structural stability of the battery cell 20. For example, the thickness T2 of the bottom wall 212 may be approximately 1 mm.

The cover plate 22 is opposite to the bottom wall 212. No electrode terminal 24 needs to be disposed on the cover plate 22. If the thickness T1 of the cover plate 22 is relatively large, then the large thickness increases the weight and footprint of the battery cell 20. If the thickness T1 of the cover plate 22 is relatively small, then the small thickness increases the difficulty of connection between the cover plate 22 and the housing 21. For example, during welding between the cover plate 22 and the housing 21, the small thickness increases the difficulty of the welding process. Therefore, in some embodiments, the thickness T1 of the cover plate 22 is greater than or equal to 0.1 mm and less than or equal to 3 mm, thereby reducing the weight and volume of the battery cell 20 but without increasing the difficulty of connection between the cover plate 22 and the housing 21. For example, the thickness T1 of the cover plate 22 may be 0.5 mm to 0.6 mm.

This application does not limit the thickness of the sidewall 213 of the housing 21. The thickness of the sidewall 213 may remain the same as the thickness of the sidewall of the housing 21 in the related art. For example, the thickness of the sidewall 213 may be greater than or equal to 0.4 mm and less than or equal to 0.5 mm. Preferably, the thickness of the sidewall 213 may be less than or equal to the thickness T2 of the bottom wall 212, and may differ from the thickness T2 of the bottom wall 212 by a margin that falls within an appropriate range such as 0.1 mm to 2 mm, so as to avoid the damage caused by an excessive difference of the stretching amount between the sidewall and the bottom wall during stretching of the housing 21.

In some embodiments, the cover plate 22 is made of a metal material or a polymer material. Such materials are easily achievable and ensure sufficient strength of the cover plate 22.

The cover plate 22 may be connected to the housing 21 by welding, riveting, bonding, snap-fitting, or the like. Preferably, in some embodiments, the cover plate 22 is welded to the housing 21. The connection implemented by welding exhibits the advantages of good connection performance, high airtightness and watertightness, and easy operation and implementation, thereby not only implementing the connection between the cover plate 22 and the housing 21, but also improving the hermeticity of the junction between the cover plate 22 and the housing 21. For example, the cover plate 22 may be welded to the housing 21 by laser welding. Laser welding exhibits the advantages of fast speed, large depth, narrow weld seams, and resistance to deformation, and is especially suitable for a safety-demanding scenarios such as batteries, and can implement reliable welding between the housing 21 and the cover plate 22 of the battery cell 20. The junction between the cover plate 22 and the housing 21 may mean, for example, a region of the cover plate 22 and the housing 21, the region being used for implementing fixation and connection between the cover plate and the housing. For example, in a process of welding the cover plate 22 to the housing 21, the junction between the cover plate 22 and the housing 21 may be a weld mark formed by welding between the cover 22 and the housing 21. The following description uses an example in which the cover plate 22 is connected to the housing 21 by welding.

In some embodiments, a blocking structure 214 is disposed in the opening 211 of the housing 21. The blocking structure 214 is configured to limit a depth by which the cover plate 22 enters the housing 21 in a first direction X perpendicular to the bottom wall 212. Because the blocking structure 214 constrains the cover plate 22 in the first direction X, the cover plate 22 is not prone to wobble in the first direction X in a process of connecting the cover plate 22 to the housing 21.

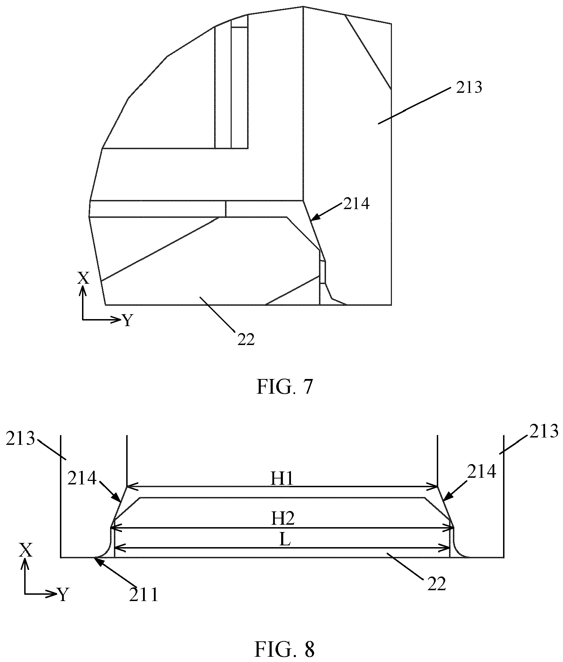

For example, as shown in FIG. 7 that is a close-up view of a junction between the housing 21 and the cover plate 22, the blocking structure 214 is a ramp 214 formed on a surface of a sidewall 213 of the housing 21, the surface being oriented toward the interior of the housing 21. Specifically, as shown in FIG. 8 that is a schematic diagram of connection between the housing 21 and the cover plate 22, the dimension L of the cover plate 22 in a second direction Y perpendicular to the sidewall 213 of the housing 21 falls between a first distance H1 and a second distance H2. The first distance H1 and the second distance H2 are a minimum distance and a maximum distance between two opposite ramps 214 in the second direction Y respectively. As can be seen from FIG. 8, the ramp 214 is disposed on the surface of the sidewall 213, the surface being oriented toward the interior of the housing 21. Appropriate dimensions of the ramp 214 and the cover plate 22 in the second direction Y are selected. In this way, when the cover plate 22 fits and covers the opening 211 along the first direction X, the ramp 214 can limit the depth by which the cover plate 22 enters the housing 21, so that the cover plate 22 is constrained in the first direction X, and the cover plate 22 is not prone to wobble in the first direction X in a process of connecting the cover plate 22 to the housing 21. Understandably, the dimension L may be a maximum dimension of the cover plate 22 in the second direction Y. Optionally, in order to facilitate the entry of the cover plate 22 into the housing 21, the dimension of a part of the cover plate 22, the part being located on a side oriented toward the interior of the battery cell 20, may be smaller than the dimension of a part of the cover plate 22, the part being located on a side oriented away from the interior of the battery cell 20.

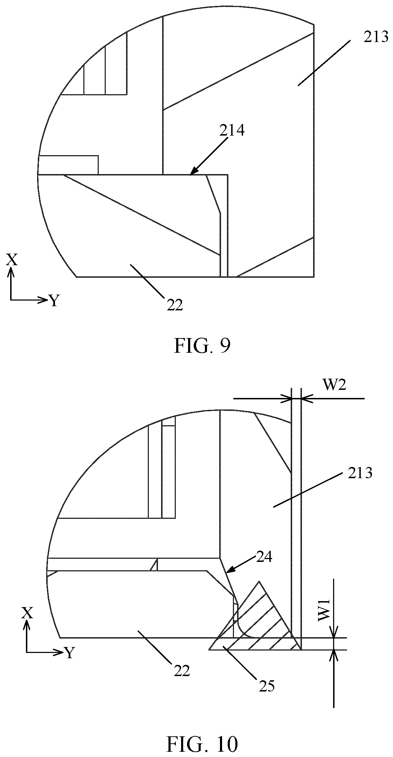

For another example, as shown in FIG. 9 that is a close-up view of a junction between the housing 21 and the cover plate 22, the blocking structure 214 is a step 214 formed on a surface of a sidewall 213 of the housing 21, the surface being oriented toward the interior of the housing 21. The cover plate 22 is disposed on the step 214. In this way, when the cover plate 22 fits and covers the opening 211 along the first direction X, because the edge of the cover plate 22 laps the step face of the step 214, the step 214 can limit the depth by which the cover plate 22 enters the housing 21, so that the cover plate 22 is constrained in the first direction X, and the cover plate 22 is not prone to wobble in the first direction X in a process of connecting the cover plate 22 to the housing 21.

FIG. 7 to FIG. 9 are merely examples. The blocking structure 214 may be in other forms different from the ramp 214 and the step 214 shown in FIG. 7 to FIG. 9. The form of the blocking structure is not limited herein.

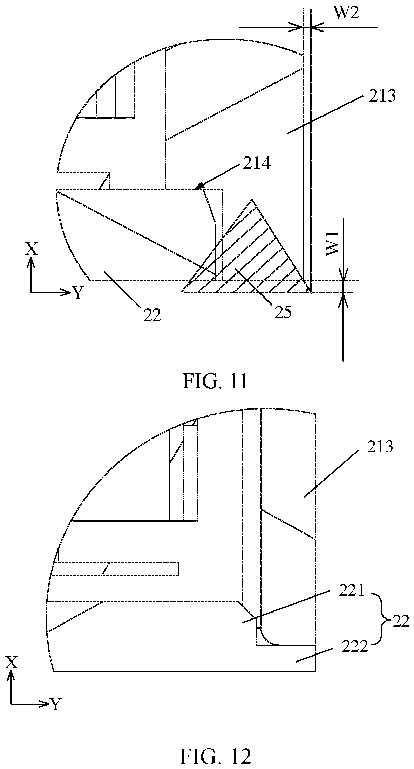

In some embodiments, a weld seam between the cover plate 22 and the housing 21 is perpendicular to the bottom wall 212. A weld mark 25 formed by welding between the cover plate 22 and the housing 21 exceeds the sidewall 213 in the first direction X by a margin W1 less than or equal to 0.5 mm. The weld mark 25 exceeds the sidewall 213 in the second direction Y by a margin W2 less than or equal to 0.08 mm. For example, FIG. 10 and FIG. 11 are schematic diagrams of a weld mark 25 formed by welding the housing 21 and the cover plate 22 based on the structure shown in FIG. 7 to FIG. 9. As can be seen, the weld seam between the cover plate 22 and the housing 21 runs along the first direction X. In other words, the cover plate 22 is welded to the housing 21 along the first direction X. The weld seam is a seam used for welding and formed between an end face of the cover plate 22 along the second direction Y and the sidewall 213 of the housing 21. The weld mark 25 formed by the welding exceeds the sidewall 213 in the first direction X by a margin W1 less than or equal to 0.5 mm, and the weld mark 25 exceeds the sidewall 213 in the second direction Y by a margin W2 less than or equal to 0.08 mm. In this way, the weld mark 25 formed by the welding between the cover plate 22 and the housing 21 can be prevented from interfering with other surrounding structural components, thereby avoiding an impact on other structural components.

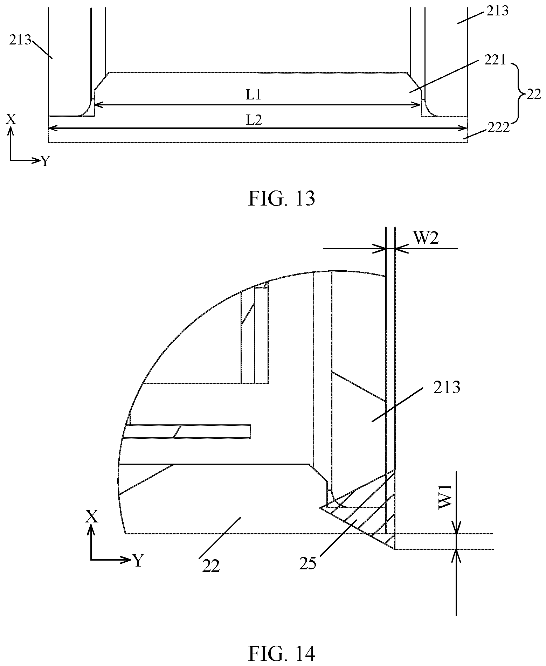

In some embodiments, as shown in FIG. 12 that is a close-up view of a junction between the housing 21 and the cover plate 22, the cover plate 22 includes a first part 221 and a second part 222. Specifically, as shown in FIG. 13 that is a schematic diagram of the connection between the housing 21 and the cover plate 22, a dimension L1 of the second part 222 in the second direction Y perpendicular to the sidewall 213 of the housing 21 is greater than a dimension L2 of the first part 221 in the second direction Y. In this way, the first part 221 is accommodated in the opening 211, and an edge of the second part 222 abuts on an end face of the sidewall 213, the end face being oriented away from the bottom wall 212. In this way, with a T-shaped cover plate 22 in use, when the cover plate 22 fits and covers the opening 211 along the first direction X, because the edge of the second part 222 of the cover plate 22 abuts on the end face of the sidewall 213 and the end face is oriented away from the bottom wall 212, the sidewall 213 can block the second part 222 from entering the housing 21, thereby limiting the depth by which the cover plate 22 enters the housing 21. In this way, the cover plate 22 is constrained in the first direction X, and the cover plate 22 is not prone to wobble in the first direction X in a process of connecting the cover plate 22 to the housing 21.

In some embodiments, the weld seam between the cover plate 22 and the housing 21 is perpendicular to the sidewall 213. In other words, along the second direction Y, the weld mark 25 formed by the welding between the cover plate 22 and the housing 21 exceeds the sidewall 213 in the first direction X by a margin less than or equal to 0.5 mm, and the weld mark exceeds the sidewall 213 in the second direction Y by a margin less than or equal to 0.08 mm. For example, FIG. 14 is a schematic diagram of a weld mark 25 formed by welding the housing 21 and the cover plate 22 based on the structure shown in FIG. 12 and FIG. 13. As can be seen, the weld seam between the cover plate 22 and the housing 21 runs along the second direction Y. In other words, the cover plate 22 is welded to the housing 21 along the second direction Y. The weld seam is a seam used for welding and formed between a surface of the second part 222 and an end face, away from the bottom wall 212, of the sidewall 213, where the surface of the second part exceeds the first part 221 along the second direction Y and is oriented toward the interior of the battery cell 20. The weld mark 25 formed by the welding exceeds the sidewall 213 in the first direction X by a margin W1 less than or equal to 0.5 mm, and the weld mark 25 exceeds the sidewall 213 in the second direction Y by a margin W2 less than or equal to 0.08 mm. In this way, the weld mark 25 formed by the welding between the cover plate 22 and the housing 21 can be prevented from interfering with other surrounding structural components, thereby avoiding an impact on other structural components.

An embodiment of this application further provides a battery 10. The battery 10 includes: the battery cell 20 according to any one of the foregoing embodiments; and a box 11, where the box 11 is configured to accommodate a plurality of battery cells 20. The electrode terminal 24 of the battery cell 20 is disposed on the bottom wall 212, away from the cover plate 22, of the housing 21, so that the junction between the cover plate 22 and the housing 21 is far away from the electrode terminal 24. Therefore, when the battery 10 is subjected to an external impact, the impact on the junction between the cover plate 22 and the housing 21 of the battery cell 20 is reduced, the risk of failure of connection between the cover plate 22 and the housing 21 is reduced, and the safety performance of the battery cell 10 is improved.

In an implementation, when the battery cell 20 is disposed in a box 11, the cover plate 22 of the battery cell 20 is fixed to a wall of the box 22.

In an implementation, sidewalls 213 of the housings 21 of adjacent battery cells 20 in the box 11 are fixed to each other.

In an implementation, the cover plate 22 of the battery cell 20 is located below the bottom wall 212 of the housing 21 of the battery cell 20 when the battery 10 is disposed in an electrical device.

Understandably, for the description about each feature of the battery 10, reference may be made to the foregoing description about the battery cell 20. For brevity, details are omitted here.

An embodiment of this application further provides an electrical device 50. The electrical device 50 includes the battery 10 according to any one of the foregoing embodiments. The battery 10 is configured to provide electrical energy for the electrical device 50. The electrical device 50 may be a vehicle, for example.

It is hereby noted that to the extent that no conflict occurs, embodiments of this application and the features in the embodiments may be combined with each other.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, **characterized in that** the battery cell comprises:
a housing, on which an opening is created;
an electrode assembly, accommodated in the housing;
an electrode terminal, disposed on a bottom wall of the housing and connected to a tab of the electrode assembly, wherein the bottom wall is opposite to the opening; and
a cover plate, connected to the housing and configured to fit and cover the opening, wherein the battery cell is disposed in a box of a battery, and the cover plate is fixed to a wall of the box.

2. The battery cell according to claim 1, **characterized in that** the box contains a plurality of the battery cells, and sidewalls of the housings of adjacent battery cells are fixed to each other.

3. The battery cell according to claim 1 or 2, **characterized in that** the cover plate is located below the bottom wall when the battery is disposed in an electrical device.

4. The battery cell according to any one of claims 1 to 3, **characterized in that** a thickness of the bottom wall is greater than a thickness of the cover plate.

5. The battery cell according to any one of claims 1 to 4, **characterized in that** a thickness of the bottom wall is greater than or equal to 0.1 mm and less than or equal to 5 mm.

6. The battery cell according to any one of claims 1 to 5, **characterized in that** a thickness of the cover plate is greater than or equal to 0.1 mm and less than or equal to 3 mm.

7. The battery cell according to any one of claims 1 to 6, **characterized in that** the cover plate is made of a metal material or a polymer material.

8. The battery cell according to any one of claims 1 to 7, **characterized in that** the cover plate is welded to the housing.

9. The battery cell according to claim 8, **characterized in that** the cover plate is welded to the housing by laser welding.

10. The battery cell according to any one of claims 1 to 9, **characterized in that** a blocking structure is disposed in the opening of the housing, and the blocking structure is configured to limit a depth by which the cover plate enters the housing in a first direction perpendicular to the bottom wall.

11. The battery cell according to claim 10, **characterized in that** the blocking structure is a ramp formed on a surface of a sidewall of the housing, the surface being oriented toward an interior of the housing; a dimension of the cover plate in a second direction perpendicular to the sidewall falls between a first distance and a second distance, and the first distance and the second distance are a minimum distance and a maximum distance between two opposite ramps in the second direction respectively.

12. The battery cell according to claim 10, **characterized in that** the blocking structure is a step formed on a surface of a sidewall of the housing, the surface being oriented toward an interior of the housing; and the cover plate is disposed on the step.

13. The battery cell according to claim 11 or 12, **characterized in that** a weld seam between the cover plate and the housing is perpendicular to the bottom wall, a weld mark formed by welding between the cover plate and the housing exceeds the sidewall in the first direction by a margin less than or equal to 0.5 mm, and the weld mark exceeds the sidewall in the second direction by a margin less than or equal to 0.08 mm.

14. The battery cell according to any one of claims 1 to 9, **characterized in that** the cover plate comprises a first part and a second part, a dimension of the second part in a second direction perpendicular to a sidewall of the housing is greater than a dimension of the first part in the second direction, the first part is accommodated in the opening, and an edge of the second part abuts on an end face of the sidewall, the end face being oriented away from the bottom wall.

15. The battery cell according to claim 14, **characterized in that** a weld seam between the cover plate and the housing is perpendicular to the sidewall, a weld mark formed by welding between the cover plate and the housing exceeds the sidewall in the first direction by a margin less than or equal to 0.5 mm, and the weld mark exceeds the sidewall in the second direction by a margin less than or equal to 0.08 mm.

16. The battery cell according to any one of claims 1 to 15, **characterized in that** an injection hole configured to inject an electrolyte solution is further created on the bottom wall.

17. The battery cell according to any one of claims 1 to 16, **characterized in that** an electrode lead-out hole is further created on the bottom wall, and the electrode terminal is mounted in the electrode lead-out hole.

18. The battery cell according to any one of claims 1 to 17, **characterized in that** a pressure relief mechanism is disposed on the cover plate, and the pressure relief mechanism is configured to release an internal pressure of the battery cell when the internal pressure exceeds a threshold.

19. A battery, **characterized in that** the battery comprises:
a plurality of the battery cells according to any one of claims 1 to 18; and
a box, configured to accommodate the plurality of the battery cells, wherein the cover plate of the battery cell is fixed to the wall of the box.

20. The battery according to claim 19, **characterized in that** sidewalls of the housings of adjacent battery cells in the box are fixed to each other.

21. The battery according to claim 19 or 20, **characterized in that** the cover plate of the battery cell is located below the bottom wall of the housing of the battery cell when the battery is disposed in an electrical device.

22. An electrical device, **characterized in that** the electrical device comprises the battery according to any one of claims 19 to 21, and the battery is configured to provide electrical energy.
